# EUROPÄISCHE PATENTSCHRIFT

(11) **EP 0 730 334 B1**
(45) Veröffentlichungstag und Bekanntmachung des Hinweises auf die Patenterteilung: **14.04.1999**
(21) Anmeldenummer: 96100635.0
(22) Anmeldetag: 18.01.1996
(51) Int. Cl.: H02K 1/14, H02K 15/06

(54) **Ständer für eine elektrische Aussenpolmaschine**
Rotor for salient pole machine
Rotor pour machine à pôles saillants

(30) Priorität: 03.03.1995 DE 19507264
(43) Veröffentlichungstag der Anmeldung: 04.09.1996
(73) Patentinhaber: C. & E. FEIN GmbH & Co., D-70176 Stuttgart (DE)
(72) Erfinder:
(74) Vertreter: Gahlert, Stefan, Dr.-Ing.

(56) Entgegenhaltungen:
- DE-A- 3 842 560
- FR-A- 1 351 925
- FR-A- 2 144 667
- GB-A- 842 157
- PATENT ABSTRACTS OF JAPAN vol. 010, no. 133 (E-404), 17.Mai 1986 & JP-A-60 261335 (INOUE JAPAX KENKYUSHO KK), 24.Dezember 1985,

## Beschreibung

Die Erfindung betrifft einen Ständer für eine elektrische Außenpolmaschine, insbesondere für einen Universalmotor, mit einem ringförmigen Joch, an dem eine Mehrzahl von Polen vorgesehen ist, deren Polschuhe vom Joch aus derart nach innen vorstehen und in Polhörnern auslaufen, daß jeweils beiderseits eines Polschuhs zwischen dem Polhorn und dem Joch eine Nut zur Aufnahme einer Ständerwicklung gebildet ist, wobei der Ständer in Axialrichtung zumindest in zwei Ständerteile derart unterteilt ist, daß bei zumindest zwei Polen jeweils zumindest eine der beiden gegenüberliegenden Nuten eines Pols in der Nähe des Nutengrundes geteilt ist, wobei die Ständerteile an ihren Enden jeweils formschlüssig ineinandergreifen und die Ständerteile mittels zwischen die Ständerteile eingreifender Sicherungselemente gegen Relativverschiebungen in Radialrichtung gesichert sind.

Ein derartiger Ständer ist aus der GB-A-842 157 bekannt.

Universalmotoren für Elektrowerkzeuge sind als Außenpolmaschinen ausgebildet, bei denen die Feldwicklungen zunächst gewickelt und meist bandagiert werden, dann beiderseits eines Polschuhs in die zwischen Polschuh und Joch gebildeten Nuten eingeschoben werden und anschließend möglichst weit in die Nuten hineingedrückt werden, um die Nuten möglichst weitgehend auszufüllen.

Eine derartige Montage ist relativ aufwendig und ermöglicht dennoch keine vollständige Ausfüllung der Nuten mit Entwicklungspaketen der Feldspulen, da diese mit beiden Enden über den Polschuh geschoben werden müssen, um in die Nuten zu gelangen.

Um eine Vereinfachung der Montage zu ermöglichen, ist deshalb gemäß der zuvor erwähnten GB-A-842 157 der Ständer jeweils in der Nähe des Nutengrundes eines Pols in Ständerteile unterteilt, die beim Aneinanderfügen formschlüssig ineinandergreifen. Um nach dem Einsetzen der Wicklungen und dem Zusammenfügen der Ständerteile die einzelnen Ständerteile gegen Radialverschiebungen zu sichern, sind zusätzlich die Polhörner so weit verlängert, daß diese einen innenliegenden geschlossenen Ring bilden und in einer etwa senkrecht zur Fügungsebene der formschlüssig aneinander liegenden Ständerteile axiale Öffnungen bilden, in die Sicherungsstifte einschiebbar sind.

Der Erfindung liegt die Aufgabe zugrunde, einen Ständer für eine elektrische Außenpolmaschine der eingangs genannten Art derart zu verbessern, daß die Montage des Ständers weiter vereinfacht wird und eine bessere Füllung der Nuten mit den Wicklungspaketen erreicht wird. Diese Aufgabe wird erfindungsgemäß durch einen Ständer mit den Merkmalen des Patentanspruchs 1 gelöst.

Erfindungsgemäß wird durch die Trennung des Ständers in der Nähe des Nutengrundes zunächst eine Einführung der fertig gewickelten und bandagierten Ständerwicklung mit einem Ende in die eine Nut und dann mit dem anderen Ende zweckmäßigerweise von außen in die geteilte Nut ermöglicht, wobei nach Zusammenfügen der Ständerteile durch die in der Nähe des Nutengrundes im Bereich der formschlüssig ineinandergreifenden Ständerteile vorgesehenen axialen Öffnungen Sicherungselemente einschiebbar sind, um die Ständerteile gegen Radialverschiebungen zu sichern. Da die axialen Öffnungen zur Aufnahme der Sicherungselemente sich im Bereich der Berührungsflächen der formschlüssig ineinandergreifenden Ständerteile, also in der Nähe des Nutengrundes, befinden, können die Polhörner ihre herkömmliche Form beibehalten und müssen nicht zu einer Ringform verlängert werden, wie es nach dem Stand der Technik erforderlich ist. Auf diese Weise wird das Einlegen der Wicklungspakete in den Nutengrund erheblich vereinfacht.

Somit wird auf einfache Weise ein Einlegen der fertig gewickelten und bandagierten Ständerwicklungen über die Polschuhe in die Nuten ermöglicht, wobei gleichzeitig eine praktisch vollständige Ausfüllung der Nuten und so eine erhebliche Erhöhung des Kupferfüllfaktors erreicht wird. So läßt sich eine Leistungssteigerung von etwa 15 bis 20 % erreichen. Da ein Zurechtbiegen der Ständerwicklungen zum Überstreifen über die Polschuhe und zum nachfolgenden Eindrücken in die Nuten nicht mehr erforderlich ist, können die Wickelköpfe auf die notwendige Minimallänge gekürzt werden, was eine Kupfer- und Gewichtsersparnis bedeutet. Gleichzeitig ist damit eine Energieersparnis verbunden. Durch die kürzeren Wickelköpfe kann bei sonst gleichen Außenabmessungen ein größerer Innendurchmesser mit einem größeren Anker erreicht werden, was zu einer entsprechenden Leistungssteigerung führt. Da sich die Ständerwicklungen erfindungsgemäß wesentlich einfacher in die Nuten einbringen lassen als bei herkömmlichen Ständern, wird die Zeit für das Einlegen der Ständerwicklungen erheblich verkürzt, was nur unwesentlich durch den geringen zusätzlichen Aufwand zum Zusammenfügen der Ständerteile beeinträchtigt wird.

In zusätzlicher Weiterbildung der Erfindung sind die Sicherungselemente als Sicherungsstifte ausgebildet, die mit einer Preßpassung in die axialen Öffnungen eingebracht sind.

Dadurch wird die Fixierung der Ständerteile aneinander noch weiter vereinfacht.

Gemäß einer weiter bevorzugten Ausführung der Erfindung können die Sicherungselemente an ihren Enden zur Fixierung der Ständerteile gestaucht werden. Somit wird auch bei der üblichen Ausführung der Ständerteile als Blechpakete auf einfache Weise eine vollständige und rüttelsichere Festlegung der Ständerteile aneinander gewährleistet. Hierbei können die Sicherungselemente auch als Nieten ausgeführt sein.

Gemäß einer weiter vorteilhaften Ausgestaltung der Erfindung sind die Ständerteile an ihren Berührungsflächen zueinander selbstzentrierend ausgebildet.

Auf diese Weise wird das Zusammenfügen der Ständerteile in die gewünschte Endlage und das anschließende Fixieren erheblich vereinfacht.

Gemäß einer weiteren Ausführung der Erfindung werden die Ständerteile nach dem Zusammenfügen miteinander verschweißt oder hartverlötet. Auf diese Weise kann unabhängig von der Gestaltung der Berührungsflächen der Ständerteile eine zuverlässige und sichere Verbindung der Ständerteile miteinander erreicht werden.

Sofern der Ständer wie üblich aus Blechpaketen besteht, sollten dabei die Ständerteile zumindest an ihren axialen Enden miteinander verschweißt oder hartverlötet sein.

In weiter bevorzugter Ausführung der Erfindung sind die Ständerteile symmetrisch zur Mittelachse des Ständers ausgebildet, wodurch die Auswirkungen auf den Magnetfluß durch die Aufteilung des Ständers symmetrisch verteilt werden und somit keinen nachteiligen Einfluß auf den Rundlauf der Maschine haben können.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Vorderansicht eines erfindungsgemäßen Ständers, wobei die Wicklungspakete geschnitten dargestellt sind und
- Fig. 2: eine Ansicht eines Ständerteils gemäß Fig. 1, wobei das Einsetzen der Ständerwicklung in die Nuten angedeutet ist und zum Vergleich das Einsetzen der Ständerwicklung bei einem herkömmlichen Ständer dargestellt ist.

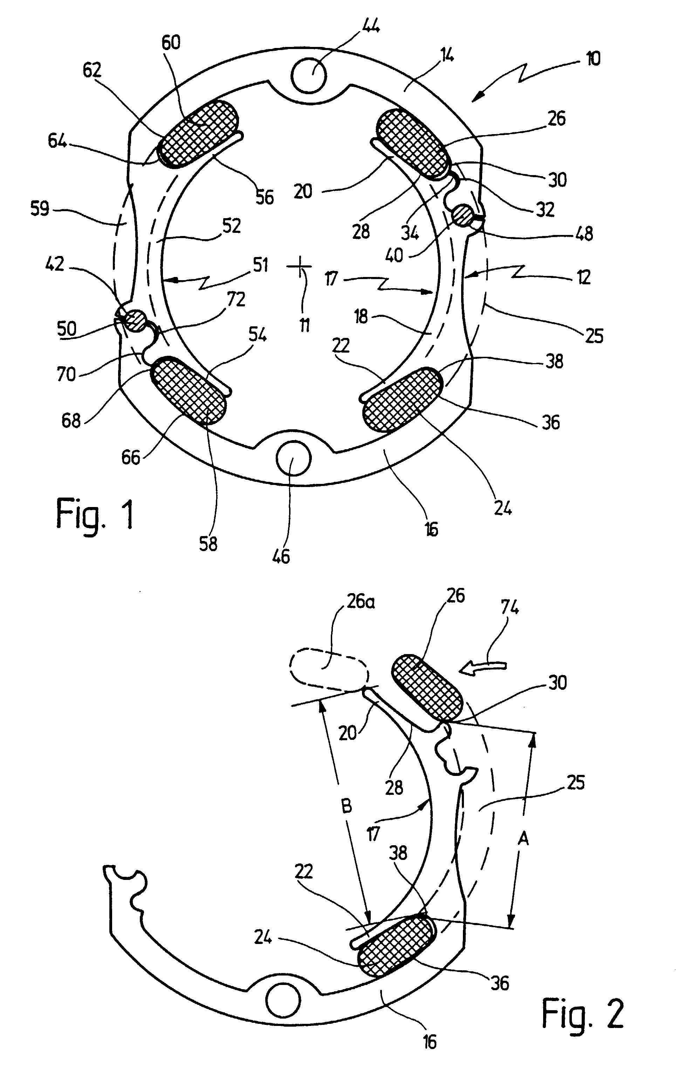

In Fig. 1 ist ein erfindungsgemäßer Ständer insgesamt mit der Ziffer 10 bezeichnet.

Der Ständer 10 umfaßt ein ringförmiges Joch 12, an dem zwei gegenüberliegende Pole 17, 51 vorgesehen sind. Jeder Pol 17, 51 umfaßt einen etwa sichelförmigen Polschuh 18, 52, der beiderseits in Polhörner 20, 22 bzw. 54, 56 ausläuft, wobei zwischen den Polhörnern 20, 22 bzw. 54, 56 und dem Joch 12 jeweils Nuten 28, 36 bzw. 62, 66 mit annähernd U-förmigem Querschnitt für die Aufnahme der Ständerwicklungen 25 bzw. 59 gebildet sind.

Die Ständerwicklungen oder auch Feldspulen 25 bzw. 59 werden vor der Montage in an sich bekannter Weise gewickelt und bandagiert.

Erfindungsgemäß ist der Ständer 10 in zwei Ständerteile 14, 16 aufgeteilt, wobei die beiden Ständerteile 14, 16 in Axialrichtung getrennt sind und wobei die erste Trennfläche vom Nutengrund 30 des ersten Pols 17 durch das Joch 12 in nachfolgend noch näher erläuterter Weise nach außen verläuft und die zweite Trennfläche vom Nutengrund 68 der symmetrisch zur Mittelachse des Ständers 10 gegenüberliegenden Nuten 66 des zweiten Pols 51 ausgeht.

Beide Ständerteile 14, 16 sind spiegelsymmetrisch zur Mittelachse 11 des Ständers 10 ausgebildet.

Dabei sind die beiden Ständerteile 14, 16 als Blechpaketteile ausgeführt, wobei die einzelnen Blechlamellen in an sich bekannter Weise jeweils mittels Stanzzungen in entsprechende gegenüberliegende Stanzausnehmungen der benachbarten Blechlamellen eingreifen. Ferner ist der Ständer 10 von zwei in Axialrichtung verlaufenden Befestigungsbohrungen 44, 46 durchsetzt, die jeweils mittig zwischen den beiden Polen 17, 51 im Joch 12 angeordnet sind.

Die Trennflächen zwischen den beiden Ständerteilen 14, 16 verlaufen nun derart, daß die Berührungsflächen 32, 34 bzw. 70, 72 der beiden aneinandergefügten Ständerteile 14, 16 jeweils vom Nutengrund 30 bzw. 68 ausgehen, dann zunächst bogenförmig nach außen verlaufen und sodann wieder nach innen zurückgeschwungen sind, derart, daß die beiden Berührungsflächen 32, 34 bzw. 70, 72 einerseits formschlüssig und selbstzentrierend aneinandergefügt sind und andererseits gemeinsam jeweils eine axiale Öffnung 48 bzw. 50 mit kreisförmigem Querschnitt umschließen, in die ein Sicherungselement 40 bzw. 42 einsetzbar ist, das als Sicherungstift ausgebildet ist. Nach dem Einsetzen der Ständerwicklungen 25 bzw. 59 mit den Wicklungspaketen 24, 26 bzw. 58, 60 in die Nuten, das nachfolgend noch anhand von Fig. 2 erläutert wird, können so die beiden Ständerteile 14, 16 unter Ausnutzung der Selbstzentrierung ineinander gefügt werden und durch Einsetzen der Sicherungselemente 40 bzw. 42, die als Sicherungsstifte ausgebildet sein können, fest miteinander verbunden werden. Die Sicherungsstifte 40 bzw. 42 ermöglichen so zusammen mit den Berührungsflächen 32, 34 bzw. 70, 72 eine formschlüssige Festlegung der Ständerteile 14, 16 aneinander.

Dabei können die Sicherungselemente 40, 42 mit Preßpassung in die axialen Öffnungen 48, 50 eingebracht werden und an ihren Enden zusätzlich gestaucht werden, um die Ständerteile 14, 16 endgültig aneinander zu fixieren. Daneben ist auch eine Ausführung der Sicherungselemente 40, 42 als Nieten denkbar. Darüber hinaus kann eine dauerhafte Verbindung der beiden Ständerteile 14, 16 miteinander dadurch erreicht werden, daß die Ständerteile 14, 16 entlang der außenliegenden Trennlinien durchgehend verschweißt oder hartverlötet werden, wobei es bei zusätzlicher Verwendung der Sicherungselemente 40, 42 ausreichend ist, die obersten Lagen der Blechlamellen an beiden axialen Enden des Ständers 10 zu verbinden.

Das Einsetzen der Ständerwicklungen oder Feldspulen 25 bzw. 59 in die Nuten 28, 36 bzw. 62, 66 ist nachfolgend anhand von Fig. 2 erläutert.

Die fertiggewickelte und bandagierte Ständerwicklung 25 wird mit der einen Seite ihres Wicklungspaketes 24 in die eine Nut 36 des ersten Pols 17 eingesetzt. Die Ständerwicklung 25 kann nunmehr mit dem anderen Ende ihres Wicklungspakets 26 von außen in die geöffnete gegenüberliegende Nut 28 angeschwenkt werden, wie dies durch den Pfeil 74 angedeutet ist. Dabei ist lediglich die geringe Entfernung A zu überwinden, die durch den Abstand zwischen dem Nutengrund 38 der ersten Nut 36 des Pols 17 vom geteilten Nutengrund 30 der anderen Nut 28 gegeben ist.

Zum Vergleich mit dem Stand der Technik ist auf der gegenüberliegenden Seite das Wicklungspaket 26a gestrichelt dargestellt, das in herkömmlicher Weise von Innen über das Polhorn 20 gezogen werden muß und erst anschließend in die Nut 28 eingedrückt werden kann. Es ist klar erkennbar, daß der Abstand B, den die beiden Wicklungspakete 24, 26a bei einem herkömmlichen Ständer aufweisen müssen, erheblich größer ist als der Abstand A gemäß der Erfindung.

Nach dem Einlegen der Ständerwicklungen 25 bzw. 59 in die Nuten 28, 36 bzw. 62, 66 an beiden Polen 17, 51 werden die Ständerteile 14, 16 wie zuvor beschrieben zusammengefügt und durch die Sicherungselemente 40, 42 miteinander verbunden und ggf. zusätzlich miteinander verschweißt oder hartverlötet.

Besondere Vorteile weist die Erfindung bei solchen Motoren auf, bei denen mit hohem Staubanfall zu rechnen ist, also etwa für Schleifmaschinen, bei denen die Wicklungen daher bandagiert werden müssen und in der Regel von Hand eingebaut werden müssen, und wobei es auf eine möglichst platzsparende und leichte Bauweise ankommt.

## Patentansprüche

1. Ständer für eine elektrische Außenpolmaschine, insbesondere für einen Universalmotor, mit einem ringförmigen Joch (12), an dem eine Mehrzahl von Polen (17, 51) vorgesehen ist, deren Polschuhe (18, 52) vom Joch (12) aus derart nach innen vorstehen und in Polhörnern (20, 22, 54, 56) auslaufen, daß jeweils beiderseits eines Polschuhs (18, 52) zwischen dem Polhorn (20, 22, 54, 56) und dem Joch (12) eine Nut (28, 36, 62, 66) zur Aufnahme einer Ständerwicklung (25, 59) gebildet ist, wobei der Ständer (10) in Axialrichtung zumindest in zwei Ständerteile (14, 16) derart unterteilt ist, daß bei zumindest zwei Polen (17, 51) jeweils zumindest eine der beiden gegenüberliegenden Nuten (28, 66) eines Pols (17, 51) in der Nähe des Nutengrundes (30, 68) geteilt ist, wobei die Ständerteile (14, 16) an ihren Enden jeweils formschlüssig ineinandergreifen und die Ständerteile (14, 16) mittels zwischen die Ständerteile (14, 16) eingreifender Sicherungselemente (40, 42) gegen Relativverschiebungen in Radialrichtung gesichert sind, dadurch gekennzeichnet, daß zwischen den Berührungsflächen der formschlüssig ineinandergreifenden Ständerteile (14, 16) in der Nähe des Nutengrundes (30, 68) axiale Öffnungen (48, 50) zur Aufnahme der Sicherungselemente (40, 42) gebildet sind.

2. Ständer nach Anspruch 1, dadurch gekennzeichnet, daß die Sicherungselemente (40, 42) als Sicherungsstifte ausgebildet sind, die mit einer Preßpassung in die axialen Öffnungen (48, 50) eingebracht sind.

3. Ständer nach Anspruch 1 oder 2, dadurch gekennzeichnet, daß die Sicherungselemente (40, 42) an ihren Enden zur Fixierung der Ständerteile (14, 16) gestaucht sind.

4. Ständer nach einem oder mehreren der vorhergehenden Ansprüche, dadurch gekennzeichnet, daß die Ständerteile (14, 16) an ihren Berührungsflächen (32, 34, 70, 72) zueinander selbstzentrierend ausgebildet sind.

5. Ständer nach einem oder mehreren der vorhergehenden Ansprüche, dadurch gekennzeichnet, daß die Ständerteile (14, 16) miteinander verschweißt oder hartverlötet sind.

6. Ständer nach Anspruch 5, dadurch gekennzeichnet, daß die Ständerteile (14, 16) zumindest an ihren axialen Enden miteinander verschweißt oder hartverlötet sind.

7. Ständer nach einem oder mehreren der vorhergehenden Ansprüche, dadurch gekennzeichnet, daß die Ständerteile (14, 16) als Blechpakete ausgebildet sind.

8. Ständer nach einem oder mehreren der vorhergehenden Ansprüche, dadurch gekennzeichnet, daß die Ständerteile (14, 16) symmetrisch ausgebildet sind.

## Claims

1. A stator for an electric external pole machine, particularly a universal motor, with an annular yoke (12) on which a plurality of poles (17, 51) are provided, the pole shoes (18, 52) of which project inwardly from the yoke (12) and terminate in pole horns (20, 22, 54, 56) in such a way that a slot (28, 36, 62, 66) to receive a stator coil (25, 59) is formed at both sides of a pole shoe (18, 52) between the pole horn (20, 22, 54, 56) and the yoke (12), wherein the stator (10) is divided in an axial direction into at least two members (14, 16), so that where there are at least two poles (17, 51) at least one of the two opposing slots (28, 66) of a respective pole (17, 51) is divided near its bottom (30, 68), the stator members (14, 16) interengaging positively at their ends and being secured against relative displacements in a radial direction by means of locking members (40, 42) which engage between the stator members (14, 16), characterised in that axial apertures (48, 50) to receive the locking members (40, 42) are formed between the contact surfaces of the positively interengaging stator members (14, 16) near the bottom (30, 68) of the slot.

2. A stator according to claim 1, characterised in that the locking members (40, 42) are in the form of locking pins which are inserted in the axial apertures (48, 50) with a press fit.

3. A stator according to claim 1 or 2, characterised in that the locking members (40, 42) are compressed at the ends to fix the stator members (14, 16).

4. A stator according to one or more of the preceding claims, characterised in that the stator members (14, 16) are self-centring relative to each other at their contact surfaces (32, 34, 70, 72).

5. A stator according to one or more of the preceding claims, characterised in that the stator members (14, 16) are welded or hard soldered together.

6. A stator according to claim 5, characterised in that the stator members (14, 16) are welded or hard soldered together at least at their axial ends.

7. A stator according to one or more of the preceding claims, characterised in that the stator members (14, 16) are in the form of bundles of laminations.

8. A stator according to one or more of the preceding claims, characterised in that the stator members (14, 16) are symmetrical.

## Revendications

1. Stator pour une machine électrique à pôles extérieurs, en particulier pour un moteur universel, comportant une culasse (12) annulaire sur laquelle est prévue une pluralité de pôles (17, 51), dont les pièces polaires (18, 52) font saillie de la culasse (12) vers l'intérieur et forment des cornes polaires (20, 22, 54, 56) de manière qu'une rainure (26, 36, 62, 66), destinée à recevoir un enroulement de stator (25, 59), est formée sur chacun des deux côtés d'une pièce polaire (18, 52), entre la corne polaire (20, 22, 54, 56) et la culasse (12), le stator (10) étant partagé axialement au moins en deux parties de stator (14, 16), de manière que pour au moins deux pôles (17, 51), au moins l'une des deux rainures (28, 66) opposées d'un pôle (17, 51) soit partagée à proximité du fond de rainure (30, 68), les parties de stator (14, 16) s'emboîtant par complémentarité de formes à chacune de leurs extrémités et les parties de stator (14, 16) étant bloquées contre des déplacements relatifs dans la direction radiale, au moyen d'éléments de blocage (40, 42) s'engageant entre les parties de stator (14, 16), caractérisé en ce que des ouvertures axiales (48, 50), destinées à recevoir les éléments de blocage (40, 42), sont formées entre les surfaces de contact des parties de stator (14, 16) s'emboîtant l'une dans l'autre par complémentarité de formes, à proximité du fond de rainure (30, 68).

2. Stator selon la revendication 1, caractérisé en ce que les éléments de blocage (40, 42) sont réalisés en tant que goupilles de blocage, qui sont introduites par un ajustement pressé dans les ouvertures axiales (48, 50).

3. Stator selon la revendication 1 ou 2, caractérisé en ce que les éléments de blocage (40, 42) sont refoulés à leurs extrémités pour la fixation des parties de stator (14, 16).

4. Stator selon une ou plusieurs des revendications précédentes, caractérisé en ce que les parties de stator (14, 16) sont formées auto-centrantes l'une par rapport à l'autre, sur leurs surfaces de contact (32, 34, 70, 72).

5. Stator selon une ou plusieurs des revendications précédentes, caractérisé en ce que les parties de stator (14, 16) sont soudées entre elles ou assemblées par un brasage dur.

6. Stator selon la revendication 5, caractérisé en ce que les parties de stator (14, 16) sont soudées entre elles ou assemblées par un brasage dur au moins a leurs extrémités axiales.

7. Stator selon une ou plusieurs des revendications précédentes, caractérisé en ce que les parties de stator (14, 16) sont formées en tant que paquets de tôle.

8. Stator selon une ou plusieurs des revendications précédentes, caractérisé en ce que les parties de stator (14, 16) sont symétriques.
